(19) Europäisches Patentamt
European Patent Office
Office européen des brevets

(11) Veröffentlichungsnummer: **0 561 814 B1**

(12) **EUROPÄISCHE PATENTSCHRIFT**

(45) Veröffentlichungstag der Patentschrift: **11.01.95**

(51) Int. Cl.[6]: **B01D 19/04**

(21) Anmeldenummer: **91920148.3**

(22) Anmeldetag: **25.11.91**

(86) Internationale Anmeldenummer:
**PCT/EP91/02210**

(87) Internationale Veröffentlichungsnummer:
**WO 92/10266 (25.06.92 92/14)**

(54) **VERWENDUNG VON ESTERPOLYOLE ENTHALTENDEN REAKTIONSMISCHUNGEN ALS SCHAUMDÄMPFENDE ZUSATZSTOFFE.**

(30) Priorität: **04.12.90 DE 4038608**

(43) Veröffentlichungstag der Anmeldung:
**29.09.93 Patentblatt 93/39**

(45) Bekanntmachung des Hinweises auf die
Patenterteilung:
**11.01.95 Patentblatt 95/02**

(84) Benannte Vertragsstaaten:
**AT BE CH DE DK ES FR GB IT LI NL SE**

(56) Entgegenhaltungen:
**EP-A- 0 024 472**
**FR-A- 2 072 148**
**FR-A- 2 313 958**
**FR-A- 2 440 216**
**US-A- 3 066 159**

(73) Patentinhaber: **Henkel Kommanditgesellschaft auf Aktien**

**D-40191 Düsseldorf (DE)**

(72) Erfinder: **MAHLER, Ulrike**
**Gnesener Strasse 8**
**D-4000 Düsseldorf 13 (DE)**
Erfinder: **DAUTE, Peter**
**Kreuzeskirchstrasse 5**
**D-4300 Essen 1 (DE)**
Erfinder: **DÖBRICH, Peter**
**Schützenstrasse 9**
**D-4000 Düsseldorf (DE)**
Erfinder: **SLADEK, Hans-Jürgen**
**Hintere Sollbrüggenstrasse 2**
**D-4150 Krefeld (DE)**
Erfinder: **KIELMANN, Sylke**
**Beckhauer Strasse 31**
**D-4600 Erkrath 2 (DE)**
Erfinder: **DE HAUT, Christian**
**53, boulevard de Seine**
**F-77310 Boissise-le-Roi (FR)**

**Beschreibung**

Die Erfindung betrifft die Verwendung von Esterpolyole enthaltenden Reaktionsmischungen, hergestellt durch ringöffnende Umsetzung von epoxidierten Carbonsäureestern mit Carbonsäuren und/oder Alkoholen, als schaumdämpfendes Mittel bei der Verarbeitung und/oder Herstellung von Nahrungsmitteln sowie bei Fermentationsprozessen.

Bei der industriellen Bearbeitung und/oder Herstellung von Nahrungsmitteln kommt der Bekämpfung und Verhütung von auftretendem Schaum beträchtliche Bedeutung zu. So können beispielsweise bei der industriellen Verarbeitung zuckerhaltiger Pflanzensäfte, wie sie in großem Maßstab bei der Gewinnung von Zuckerrüben erfolgt, besondere Schwierigkeiten durch übermäßige Schaumentwicklung, in den Klärvorrichtungen, beim Rübentransport, in den Diffuseuren sowie in den Carbonisiertanks und vor den Verdampfern auftreten. Ebenso gilt es bei der Herstellung von Kartoffelfertigprodukten wie Chips oder Pommes Frites, bei der Erzeugung von Backhefe unter Verwendung von Melasse oder anderen technischen Fermentationsprozessen wie der Gewinnung von Arzneimitteln, die Schaumbildung auf ein das technische Produktionsverfahren nicht beeinträchtigendes Maß herabzusetzen.

Die zur Schaumregulierung einzusetzenden Hilfsmittel im Nahrungsmittelbereich müssen bei der üblichen Aufarbeitung des Endprodukts weitgehend entfernbar sein, so daß sie das fertige Erzeugnis nicht mehr belasten. Darüber hinaus müssen alle Hilfsmittel, die bei der Herstellung von Nahrungsmitteln verwendet werden, geruchlos, geschmacklos und selbstverständlich physiologisch völlig unbedenklich sein. Schaumbekämpfungsmittel, die ins Abwasser gelangen, sollten weiterhin biologisch gut abbaubar sein. Aus ökologischen und ökonomischen Gründen sind besonders hochwirksame Schaumbekämpfungsmittel erwünscht, um die durch den Zusatz bedingte Verunreinigung der Nahrungsmittelerzeugnisse und der Abwasser möglichst gering zu halten. Für den praktischen Einsatz schaumdämpfender Mittel wird erwartet, daß in kleinen Anwendungsmengen hohe Spontanwirkung und gute Langzeitwirkung erreicht wird. Zudem sollten die schaumdämpfenden Zusatzstoffe sowohl aufgetretenen Schaum bekämpfen (Entschäumer) als auch präventiv Schaum verhindern (Schauminhibitoren).

Für die Entschäumung in der Zucker- und Hefeindustrie sind seit langem Fette und Öle wie Rüb-, Erdnuß-, Olivenöl sowie Wollfett im Gebrauch. Auch Fettsäuremonoglyceride, Fettsäurepolyglykolester, Polyalkylenglykole, Ethylenoxidaddukte an verzweigten Alkoholen, Alkylenoxidaddukte an Oligosaccharide sowie freie Fettalkohole sind für diesen Zweck vorgeschlagen worden. Typische Schaumbekämpfungsmittel mit Patentzitaten und Anwendungsbereichen werden in Ullmans Enzyklopädie der technischen Chemie, Band A 11 (5. Auflage) 1988, Seiten 465 bis 490 aufgeführt. Obwohl mit diesen Stoffen auch eine gewisse Schaumunterdrückung erreicht werden kann, haben sie entweder den Nachteil, daß sie nicht in geringen Mengen eingesetzt werden können oder eine nicht hinreichende vollständige biologische Abbaubarkeit aufweisen. Ein biologisch vollständiger, rascher Abbau in der Kläranlage ist jedoch heute einer der wichtigsten Anforderung an Hilfsmitteln der genannten Art.

Aufgabe der vorliegenden Erfindung ist es daher, neue schaumdämpfende Zusatzstoffe für die Herstellung bzw. Bearbeitung von Nahrungsmitteln sowie für Fermentationsprozesse bereitzustellen, die bereits in geringen Einsatzmengen spontane Entschäumung bewirken und diese Wirksamkeit über lange Zeiträume beibehalten. Gleichzeitig sollen die schaumdämpfenden Zusatzstoffe eine rasche, biologische Abbaubarkeit aufweisen.

Gegenstand der vorliegenden Erfindung ist demnach die Verwendung von Esterpolyole enthaltenden Reaktionsmischungen, hergestellt durch ringöffnende Umsetzung epoxidierter Carbonsäureester mit Carbonsäuren und/oder Alkoholen, als schaumdämpfende Zusatzstoffe bei der Herstellung und/oder Verarbeitung von Nahrungsmitteln oder bei Fermentationsprozessen.

Im Sinne der Erfindung wird der Begriff der Esterpolyole für Verbindungen gebraucht, die zumindest eine Carbonsäureestergruppe und mindestens eine Hydroxylgruppe im Esterpolyolmolekül an beliebiger Stelle und nicht zwingend in Nachbarstellung, aufweisen.

In einer ersten Ausführungsform betrifft die Erfindung die Verwendung von Esterpolyole enthaltende Reaktionsmischungen, hergestellt durch ringöffnende Umsetzung von epoxidierten Carbonsäureestern mit Alkoholen, als schaumdämpfende Zusatzstoffe. Die Herstellung derartiger Esterpolyole enthaltende Reaktionsmischungen sind bereits aus dem Stand der Technik bekannt und können nach dem sogenannten Zutropfverfahren oder Eintopfverfahren erfolgen. Nach dem Zutropfverfahren werden die zur Umsetzung vorgesehenen Alkohole zusammen mit einem sauren Katalysator, etwa einer starken Mineralsäure, vorgelegt und dazu bei einer Reaktionstemperatur zwischen 60 und 120 °C der epoxidierte Carbonsäureester kontinuierlich oder portionsweise zugegeben. Nach dem sogenannten Eintopfverfahren werden alle Reaktionspartner in Gegenwart eines sauren Katalysators bei Temperaturen zwischen 60 und 120 °C umgesetzt. Das Fortschreiten der Reaktion kann über den Gehalt an nicht abreagierten Epoxidgruppen bestimmt werden, so z. B. nach der Titrationsmethode von R. R. Jay, Analytische Chemie, 36, 667 (1964). Nach beendeter Umsetzung kann der saure Katalysator durch Neutralisation zerstört und gegebenenfalls überschüssiger Alkohol destillativ oder mittels Phasenseparation abgetrennt werden. Selbstverständlich kann der saure Katalysator auch im Reaktionsgemisch verbleiben, wenn weitere Anwendungen dadurch nicht beeinträchtigt werden.

Im Rahmen der Erfindung können als epoxidierte Carbonsäureester Ester von epoxidierten Carbonsäuren mit Alkoholen und/oder von epoxidierten Alkoholen mit Carbonsäuren zur Herstellung der erfindungsgemäß verwendeten Reaktionsmischungen eingesetzt werden. Die Herstellung der epoxidierten Carbonsäureester erfolgt nach bekannten Verfahren wie z. B. nach der EP-A-286 937 oder der DE-A-1 042 565 vollständig oder nahezu vollständig, wobei gegeben sein muß, daß die dabei entstehenden epoxidierten Carbonsäureester pro Molekül wenigstens eine Epoxidgruppe im Molekül enthalten.

Für epoxidierte Carbonsäureester von epoxidierten Alkoholen sind besonders die Epoxyderivate der Alkohole mit 12 bis 32, vorzugsweise 22 C-Atomen wie die Epoxyderivate von Oleylalkohol, Elaidylalkohol, Ricinolalkohol, Linoleylalkohol, Linolenylalkohol, Gadoleylalkohol und/oder Erucaalkohol geeignet. Obgleich auch Carbonsäureester epoxidierter Alkohole und epoxidierter Carbonsäuren eingesetzt werden können, ist die bevorzugte Gruppe im Sinne der Erfindung epoxidierte Ester von epoxidierten Carbonsäuren und aliphatischen, ein- und/oder mehrwertigen Alkoholen. Insbesondere geeignet sind epoxidierte Carbonsäureester von verzweigten und/oder unverzweigten einwertigen bis vierwertigen Alkoholen mit bis zu 40 C-Atomen, bevorzugt mit bis 36 C-Atomen und insbesondere mit 1 bis 22 C-Atomen wie Methanol, Ethanol, Propanol, 2-Ethylhexanol, Ethylenglykol, Butandiol, Neopentylglykol, Pentaerythrit und/oder Glycerin. Im Rahmen der Erfindung können auch epoxidierte Partialcarbonsäureester mehrwertiger Alkohole verwendet werden, d. h. epoxidierte Carbonsäureester mehrfunktioneller Alkohole, die noch zumindest über eine freie Hydroxylgruppe verfügen wie Partialglyceride. Unter Berücksichtigung der Anforderung an die biologische Abbaubarkeit werden ganz besonders epoxidierte Carbonsäureester bevorzugt, deren epoxidierter Carbonsäureanteil sich von einfach und/oder mehrfach ungesättigten Carbonsäuren mit 12 bis 22 C-Atomen und insbesondere von natürlich vorkommenden einfach und/oder mehrfach ungesättigten Fettsäuren mit 12 bis 22 C-Atomen ableitet. Dementsprechend eignen sich ungesättigte Fettsäuren wie Lauroleinsäure, Myristoleinsäure, Palmitoleinsäure, Ölsäure, Petroselinsäure, Gadoleinsäure, Erucasäure, Linolsäure und/oder Linolensäure ganz besonders.

Besonders bevorzugte epoxidierte Carbonsäureester sind zum einen die Triglyceride der epoxidierten natürlich vorkommenden Fettsäuren wie epoxidiertes Sojabohnenöl (Epoxidsauerstoffgehalt 5,8 bis 6,8 Gew.-%), ölsäurereiches und/oder ölsäurearmes epoxidiertes Sonnenblumenöl (Epoxidsauerstoffgehalt 4,4 bis 6,6 Gew.-%, epoxidiertes Leinöl (Epoxidsauerstoffgehalt 8,2 bis 8,6 Gew.-%) sowie epoxidiertes Tranöl (Epoxidsauerstoffgehalt 6,3 bis 6,7 Gew.-%).

Als Ausgangsstoffe für epoxidierte Carbonsäureester eignen sich die zahlreichen tierischen und/oder pflanzlichen Triglyceride wie Rindertalg, Palmöl, Kokosöl, Erdnußöl, Rüböl, Baumwollsaatöl, Sojabohnenöl, Tranöl, Sonnenblumenöl, Korrianderöl und/oder Leinöl.

Gleichermaßen bevorzugt sind epoxidierte Carbonsäureester von einwertigen Alkoholen mit natürlich vorkommenden, epoxidierten Fettsäuren wie sie beispielsweise durch Umesterungsreaktion der vorgenannten epoxidierten Triglyceride mit einwertigen Alkoholen, die im folgenden beschrieben werden, erhalten werden können.

Gemäß der einen Ausführungsform der vorliegenden Erfindung werden Esterpolyole enthaltende Reaktionsmischungen verwendet, die durch ringöffnende Umsetzung von epoxidierten Carbonsäureestern mit Alkoholen hergestellt worden sind. Zur Ringöffnung können prinzipiell gesättigte, ungesättigte, verzweigte, unverzweigte, cyclische, aromatische, einwertige primäre Alkohole eingesetzt werden. Von diesen werden besonders gesättigte, unverzweigte, einwertige primäre Alkohole mit 1 bis 22 C-Atomen, vorzugsweise bis 8 C-Atome und insbesondere bis 4 C-Atome wie Methanol, Ethanol, Propanol und/oder Butanol eingesetzt. Selbstverständlich können als einwertige primäre Alkohole auch Diole, deren eine Hydroxylgruppe verethert bzw. verestert ist, wie Monoalkylethylenglykol eingesetzt werden. Entsprechend einer weiteren Ausgestaltung der vorliegenden Erfindung können Ringöffnungsprodukte von epoxidierten Carbonsäureestern mit zweiwertigen, dreiwertigen und/oder mehrwertigen Alkoholen wie Ethylenglykol, Propylenglykol, Propandiol, Butandiol, Hexandiol, Trimethylolpropan, Glycerin, Trimethylolethan, Pentaerythrit und/oder Sorbit sowie der Kondensationsprodukte wie Diglycerin, Polyglycerine, Polytrimethylolpropan verwendet werden. Selbst Derivate der genannten mehrwertigen Alkohole wie Partialester können zur Ringöffnung eingesetzt werden, solange sie noch über mindestens eine freie Hydroxylgruppe verfügen, wie Glycerinmonooleat, Glycerinmonostearat, Trimethylolpropanmonostearat.

Entsprechend einer zweiten Ausführungsform der vorliegenden Anmeldung können Ringöffnungsprodukte epoxidierter Carbonsäureester mit Carbonsäuren als schaumdämpfende Zusatzstoffe verwendet werden. Zur Ringöffnung können synthetische, natürliche, aliphatische, aromatische, verzweigte und/oder unverzweigte Monocarbonsäuren mit bis zu 36 C-Atomen, vorzugsweise bis zu 22 C-Atomen, eingesetzt werden. Besonders bevorzugt werden Ameisen-, Essig-, Propion-, Capryl-, Caprin-, Laurin-, Behen-, Myristin-, Palmitolein-, Öl-, Stearin-, Linol- und/oder Linolensäure. Werden zur Ringöffnung ungesättigte Carbonsäuren eingesetzt bzw. miteingesetzt, erhält man besonders niedrigviskose Esterpolyole enthaltende Reaktionsmischungen, die für einige Anwendungsgebiete vorteilhaft sein können.

Auch Ringöffnungsprodukte von epoxidierten Carbonsäureestern mit Carbonsäuren sind an sich bekannte Produkte, die in der Regel nach dem Eintopfverfahren hergestellt werden. Eine nahezu vollständige Ringöffnung von epoxidiertem Sojaöl mit Leinölfettsäure oder dehydratisierter Ricinolsäure nach dem Eintopfverfahren beschreibt beispielsweise die US-A-2 909 537, eine anteilige Ringöffnung von epoxidierten Fetten mit Di- und Polycarbonsäuren oder deren Anhydriden die US-A-3 180 749. In der DE-A-39 35 127 wird die zumindest anteilsweise Ringöffnung von epoxidierten Estern und/oder epoxidierten Alkoholen mit Carbonsäuren nach dem Zutropfverfahren beschrieben, wobei die Carbonsäuren vorgelegt und die epoxidierten Reaktanten zugetropft werden. Analog den bereits bekannten Verfahren können die erfindungsgemäß verwendeten Esterpolyol enthaltenden Reaktionsmischungen hergestellt werden, wobei Reaktionstemperaturen im Bereich von 80 °C bis 270 °C bevorzugt werden. Ebenso können im Sinne der Erfindung die epoxidierten Carbonsäureester vollständig oder teilweise ringgeöffnet werden, wobei die Esterpolyole enthaltenden Reaktionsmischungen jedoch einen absoluten Restepoxidsauerstoffgehalt unter 3 Gew.-% aufweisen sollten.

Für Esterpolyole enthaltende Reaktionsmischungen, die durch vollständige bzw. nahezu vollständige ringöffnende Umsetzung hergestellt worden sind, empfiehlt sich, die epoxidierten Carbonsäureester in Mengen von 1 : 1 bis 1 : 10, vorzugsweise 1 : 1 bis 1 : 3 - berechnet als Mol-% Epoxid und bezogen auf Mol-% Säuregruppe und/oder Alkoholgruppe - mit den genannten Alkoholen und/oder Carbonsäuren abreagieren zu lassen. Für die Ringöffnung von epoxidierten Carbonsäureestern mit Carbonsäuren sind insbesondere Mengen von epoxidierten Carbonsäureestern zu Carbonsäuren von 1 : 1,1 - berechnet als Mol% Epoxid und Mol% Säuregruppe - geeignet. Um eine zumindest nahezu vollständige Ringöffnung zu erhalten, ist es jedoch noch weiterhin notwendig, die Reaktionspartner bei den bereits genannten Temperaturen abreagieren zu lassen, bis ein absoluter Restepoxidsauerstoffgehalt im Reaktionsgemisch unter 0,3 Gew.-% auftritt. Wird die Umsetzung bereits früher abgebrochen, bzw. werden Umsetzungsverhältnisse gewählt, die unter denen für eine vollständige Umsetzung liegen, so werden Esterpolyole enthaltende Reaktionsmischungen erhalten, die einen höheren Restepoxidsauerstoffgehalt aufweisen. Im Sinne der Erfindung können durchaus auch Esterpolyole enthaltende Reaktionsmischungen verwendet werden, die nur durch teilringöffnende Umsetzung erhalten worden sind und die einen Restepoxidsauerstoffgehalt aufweisen, der unter 3 Gew.-% liegen sollte.

Im Esterpolyole enthaltenden Reaktionsgemisch gegebenenfalls überschüssige Carbonsäuren und/oder Alkohole können destillativ, mittels Phasenseparation oder durch Neutralisation und gegebenenfalls anschließender Filtration entfernt werden. Möchte man gegebenenfalls überschüssige Carbonsäure abdestillieren, so ist darauf zu achten, daß Temperaturen über 300 °C vermieden werden sollten, um Crackprozesse auszuschließen. Die gegebenenfalls im Reaktionsgemisch vorhandenen sauren Katalysatoren können mittels Phasenseparation mit dem Alkohol abgetrennt, mit Basen neutralisiert werden oder im Reaktionsgemisch verbleiben.

Im Sinne der Erfindung werden Esterpolyole enthaltende Reaktionsmischungen bevorzugt, die bei Raumtemperatur als Flüssigkeit vorliegen. Natürlich können auch feste Esterpolyole enthaltende Reaktionsmischungen als schaumdämpfende Zusatzmittel, z. B. in Form einer Lösung, Emulsion oder Dispersion, verwendet werden. Zur Dosierung und für eine optimale Durchmischung mit dem zu entschäumenden Gut sowie für eine gute Benetzung bereits aufgetretene Schaumblasen eignen sich Flüssigkeiten immer besser.

Die erfindungsgemäß verwendeten Esterpolyole enthaltenden Reaktionsmischungen können je nach Bedarf in weiten Mengenverhältnissen eingesetzt werden. Sie zeigen bereits bei Zugabe geringster Mengen, vorzugsweise in Mengen unter 1 Gew.-% und insbesondere in Mengen von 20 bis 50 ppm - bezogen auf entschäumendes Gut - gute Wirksamkeiten. Eine obere Grenze der Zugabemenge ergibt sich aus Sicht der Esterpolyole enthaltenden Reaktionsmischungen nicht. Aus ökonomischen Gründen gibt der Anwendungstechniker jedoch so wenig wie möglich schaumdämpfende Zusätze zu dem entschäumten Gut, die meist unter 1 Gew.-% liegen. Selbstverständlich können die Esterpolyole enthaltenden Reaktionsmischungen mit handelsüblichen Entschäumern und/oder Schauminhibitoren, vorzugsweise von solchen, die bei Raumtemperatur flüssig sind, verwendet werden.

Die erfindungsgemäß verwendeten Esterpolyole enthaltenden Reaktionsmischungen wirken sowohl als Schauminhibitoren als auch als Entschäumer und können dementsprechend vor oder nach dem Auftreten von Schaum zugegeben werden. Sie zeigen gute Spontan- und Langzeitwirkung über den gesamten pH-Bereich sowie bei höheren und niederen Temperaturen. Zudem können sie ohne Probleme von dem zu entschäumten Gut wieder abgetrennt werden, so daß sie aufgrund ihrer Geruchs-, Geschmacklosigkeit und ihrer physiologischen Unbedenklichkeit in der Nahrungsmittelindustrie als Hilfsstoff verwendet werden können. Ganz besonders gute Ergebnisse werden erzielt, wenn man die Esterpolyole enthaltenden Reaktionsmischungen als schaumdämpfende Zusätze bei der Verarbeitung von Zuckerrüben, in der kartoffelverarbeitenden Industrie und/oder bei Fermentationsprozessen wie bei der Erzeugung von Backhefe unter Verwendung von Melasse und/oder bei Herstellung von Arzneimitteln verwendet. Bei der Verarbeitung von Zuckerrüben können die Esterpolyole enthaltende Reaktionsmischungen sowohl im Außenbetrieb, d. h. bei Transport, Reinigung und Lagerung als auch im Innenbetrieb für die Extraktion des Zuckers mit Wasser zur Schaumdämpfung verwendet werden.

## Beispiele

### A) Herstellung der entschäumenden Zusätze

**Beispiel 1:**

234 g Propionsäure, die bezogen auf die Säurezahl 3,15 Mol entsprechen, wurden im Reaktionsgefäß unter Rühren auf 140 °C erwärmt. Dazu wurden 713 g Sojaölepoxid (Epoxidsauerstoffgehalt 6,73 Gew.-%), entsprechend 3,0 Mol bezogen auf Epoxidgehalt, innerhalb von 80 Minuten zugetropft. Nach beendeter Zugabe ließ man das Reaktionsgemisch 5 Stunden bei 140 °C abreagieren (Restepoxidsauerstoffgehalt unter 0,18 Gew.-%). Anschließend wurde im Vakuum (0,02 mbar) die unumgesetzte Propionsäure (114 g) bis 190 °C abdestilliert. Man erhielt das Esterpolyolgemisch als klare, dunkelgelbe Flüssigkeit mit den Kennzahlen OHZ = 129; VZ = 277,5; JZ = 4,3; SZ = 2,1.

**Beispiel 2:**

2360 g epoxidiertes Sojaöl (Epoxidsauerstoffgehalt 6,78 Gew.-%), entsprechend 10 Mol bezogen auf Epoxidgehalt, wurden unter Rühren zu der unter Rückfluß siedenden Lösung von 9 g konzentrierter Schwefelsäure, entsprechend 0,9 Mol bezogen auf Epoxidgehalt, in 960 g Methanol, entsprechend 30 Mol bezogen auf Epoxidgehalt, getropft. Nach beendeter Zugabe des epoxidierten Sojaöls ließ man die Reaktionsmischung ca. 6 Stunden abreagieren. Anschließend wurde das Reaktionsgemisch abgekühlt, mit Diethylethanolamin neutralisiert und überschüssiges Methanol im Vakuum entfernt. Man erhielt eine klargelbe Flüssigkeit mit den Kennzahlen OHZ = 185; VZ = 163; JZ = 19,4; SZ = 1,6.

**Beispiel 3:**

100 kg Epoxystearinsäuremethylester (Epoxidsauerstoffgehalt 4,95 Gew.-%), entsprechend 309 Mol bezogen auf Epoxidgehalt, und 38,3 kg Ethylenglykol, entsprechend 618 Mol bezogen auf Epoxidgehalt, wurden in Gegenwart von 34 g konzentrierter Schwefelsäure unter Rühren auf 90 °C erhitzt. Die anfangs stark exotherme Reaktion war nach 1,5 Stunden beendet (Restepoxidsauerstoffgehalt 0,03 Gew.-%). Die Reaktionsmischung wurde abgekühlt und mit 160 g 30 gew.-%iger methanolischer Natriummethylatlösung neutralisiert. Im Vakuum (0,02 mbar) wurde das unumgesetzte Ethylenglykol (27,7 kg) bis 200 °C andestilliert. Man erhielt eine klare, gelbe Flüssigkeit mit den Kennzahlen OHZ = 234,6; VZ = 162,1; JZ = 6,9; SZ = 0,7.

**Beispiel 4:**

1019 g Epoxystearinsäuremethylester (Epoxidsauerstoffgehalt 4,95 Gew.-%), entsprechend 3 Mol bezogen auf Epoxidgehalt, 552 g Glycerin, entsprechend 6 Mol bezogen auf Epoxidgehalt, und 2,1 g Schwefelsäure wurden in einem Rührkessel vorgelegt und unter Rühren auf etwa 100 °C erhitzt. Nach ca. 2 Stunden wies die Reaktionsmischung einen Epoxidsauerstoffgehalt unter 0,1 Gew.-% auf. Die Reaktionsmischung wurde abgekühlt und mit 7 g Diethylethanolamin neutralisiert. Das überschüssige Glycerin konnte als obere Phase der Reaktionsmischung mittels Phasenseparation abgetrennt werden. Man erhielt 1257 g einer gelben, leicht trüben Flüssigkeit mit den Kennzahlen OHZ = 334; SZ = 0,3.

**Beispiel 5:**

1260 g Epoxystearinsäure-2-ethylhexylester (Epoxidsauerstoffgehalt 3,81 Gew.-%), entsprechend 3 Mol bezogen auf Epoxidgehalt, 552 g Glycerin, entsprechend 6 Mol bezogen auf Epoxidgehalt, und 2,1 g konzentrierte Schwefelsäure wurden unter Rühren auf 100 °C erhitzt. Nach ca. 5 Stunden wies die Reaktionsmischung einen Restepoxidsauerstoffgehalt unter 0,1 Gew.-% auf. Die Aufarbeitung der Reaktionsmischung erfolgte analog Beispiel 4. Man erhielt 1361 g einer gelben, leicht trüben Flüssigkeit mit den Kennzahlen OHZ = 131, SZ = 0,6.

**B) Anwendungsprüfung**

In einem 2 l Meßzylinder wurden 110 g Zuckersirup (Rübenkraut) und 420 ml Wasser eingefüllt. Mit Hilfe einer Laborschlauchpumpe mit einer Förderleistung von 3 l pro Minute wurde die Lösung mit einem Glasrohr vom Boden des Meßzylinders angesaugt. Die Rückführung der Flüssigkeit erfolgte über ein zweites Rohr, dessen unteres Ende in der Höhe der Oberkante des Meßzylinders lag. Sobald Schaum und Flüssigkeit zusammen das Volumen von 2000 ml erreichten, wurden 50 ppm der verschiedensten schaumdämpfenden Zusatzstoffe mit einer Mikropipette zugesetzt und nach 0,5; 1; 2; 3; 5; 10; 20 und 30 Minuten das Gesamtvolumen von Schaumhöhe und Flüssigkeit abgelesen. Auf diese Weise wurden bei verschiedenen pH-Werten, die durch Zugabe von Kalziumhydroxid eingestellt wurden, und bei verschiedenen Temperaturen die Esterpolyole aus Beispiel 1, 2, 3, 4 und 5 überprüft.

Tabelle I

| Entschäumende Zusätze gemäß | Zeit in Minuten nach der Entschäumerzugabe | | | | | | | | | PH | Temperatur |
|---|---|---|---|---|---|---|---|---|---|---|---|
| | 0 | 1/2 | 1' | 2' | 3' | 5' | 10' | 20' | 30' | | |
| Beispiel 1 | 2000 | 1880 | 1680 | 1520 | 1400 | 1340 | 1300 | 1220 | 1100 | 5,5 | 23°C |
| Beispiel 2 | 2000 | 1520 | 1160 | 900 | 860 | 840 | 760 | 740 | 720 | 5,5 | 23°C |
| Beispiel 3 | 2000 | 1360 | 840 | 680 | 620 | 580 | 580 | 560 | 560 | 5,5 | 23°C |
| Beispiel 4 | 2000 | 1280 | 820 | 700 | 660 | 640 | 600 | 620 | 660 | 5,5 | 23°C |
| Beispiel 4 | 2000 | 1320 | 1020 | 700 | 640 | 620 | 620 | 640 | 640 | 10,5 | 40°C |
| Beispiel 4 | 2000 | 740 | 540 | 500 | 460 | 460 | 480 | 540 | 560 | 11,0 | 10°C |
| Beispiel 5 | 2000 | 1980 | 1780 | 1600 | 1500 | 1380 | 960 | 880 | 800 | 5,5 | 23°C |

**Patentansprüche**

1. Verwendung von Esterpolyole enthaltenden Reaktionsmischungen, hergestellt durch ringöffnende Umsetzung epoxidierter Carbonsäureester mit Carbonsäuren und/oder Alkoholen, als schaumdämpfende Zusatzstoffe bei der Herstellung und/oder Verarbeitung von Nahrungsmitteln sowie bei Fermentationsprozessen.

2. Ausführungsform nach Anspruch 1, dadurch gekennzeichnet, daß die Esterpolyole enthaltenden Reaktionsmischungen in der Anwendung in Spurenmengen, vorzugsweise in Mengen unter 1 Gew.-% und insbesondere in Mengen von 20 bis 50 ppm - bezogen auf entschäumendes Gut - verwendet werden.

3. Ausführungsform nach einem der Ansprüche 1 oder 2, dadurch gekennzeichnet, daß Esterpolyole enthaltende Reaktionsmischungen verwendet werden, die aus epoxidierten Carbonsäureestern mit wenigstens einer Epoxidgruppe im Molekül, hergestellt worden sind.

4. Ausführungsform nach einem der Ansprüche 1 bis 3, dadurch gekennzeichnet, daß Esterpolyole enthaltende Reaktionsmischungen verwendet werden, die aus epoxidierten Carbonsäureestern verzweigter und/oder unverzweigter einwertiger bis vierwertiger Alkohole, hergestellt worden sind.

5. Ausführungsform nach einem der Ansprüche 1 bis 4, dadurch gekennzeichnet, daß Esterpolyole enthaltende Reaktionsmischungen verwendet werden, die aus Carbonsäureestern epoxidierter Carbonsäuren, vorzugsweise epoxidierter Carbonsäuren mit 12 bis 22 C-Atomen und insbesondere epoxidierter, natürlich vorkommender Fettsäuren mit 12 bis 22 C-Atomen, hergestellt worden sind.

6. Ausführungsform nach einem der Ansprüche 1 bis 4, dadurch gekennzeichnet, daß Esterpolyole enthaltende Reaktionsmischungen verwendet werden, die aus Carbonsäureestern epoxidierter Alkohole, vorzugsweise epoxidierter Alkohole mit 12 bis 22 C-Atomen, hergestellt worden sind.

7. Ausführungsform nach einem der Ansprüche 1 bis 6, dadurch gekennzeichnet, daß Esterpolyole enthaltende Reaktionsmischungen verwendet werden, die durch ringöffnende Umsetzung von epoxidierten Carbonsäureestern mit einwertigen primären Alkoholen bis zu 22 C-Atomen und/oder mit zweiwertigen, dreiwertigen und/oder mehrwertigen Alkoholen, die gegebenenfalls teilweise verethert oder verestert sein können, hergestellt worden sind.

8. Ausführungsform nach einem der Ansprüche 1 bis 7, dadurch gekennzeichnet, daß Esterpolyole enthaltende Reaktionsmischungen verwendet werden, die durch ringöffnende Umsetzung von epoxidierten Carbonsäureestern mit Monocarbonsäure mit bis zu 36 C-Atomen hergestellt worden sind.

9. Ausführungsform nach einem der Ansprüche 1 bis 8, dadurch gekennzeichnet, daß Esterpolyole enthaltende Reaktionsmischungen verwendet werden, die durch ringöffnende Umsetzung von epoxidierten Carbonsäureestern mit Carbonsäuren und/oder Alkoholen in Mengen von 1 : 1 bis 1 : 10 - berechnet als Mol% Epoxid und bezogen auf Mol% Säuregruppe und/oder Alkoholgruppe - hergestellt worden sind.

## Claims

1. The use of reaction mixtures containing ester polyols - prepared by ring-opening reaction of epoxidized carboxylic acid esters with carboxylic acids and/or alcohols - as foam-suppressing additives in the production and/or processing of foods or in fermentation processes.

2. The use claimed in claim 1, characterized in that the reaction mixtures containing ester polyols are used in trace amounts, preferably in quantities below 1% by weight and, more particularly, in quantities of 20 to 50 ppm, based on the material to be defoamed.

3. The use claimed in claim 1 or 2, characterized in that reaction mixtures containing ester polyols which have been produced from epoxidized carboxylic acid esters containing at least one epoxide group per molecule are used.

4. The use claimed in any of claims 1 to 3, characterized in that reaction mixtures containing ester polyols which have been produced from epoxidized carboxylic acid esters of branched and/or unbranched, monohydric to tetrahydric alcohols are used.

5. The use claimed in any of claims 1 to 4, characterized in that reaction mixtures containing ester polyols which have been produced from carboxylic acid esters of epoxidized carboxylic acids, preferably epoxidized $C_{12-22}$ carboxylic acids and, more preferably, epoxidized naturally occurring $C_{12-22}$ fatty acids are used.

6. The use claimed in any of claims 1 to 4, characterized in that reaction mixtures containing ester polyols which have been produced from carboxylic acid esters of epoxidized alcohols, preferably epoxidized $C_{12-22}$ alcohols, are used.

7. The use claimed in any of claims 1 to 6, characterized in that reaction mixtures containing ester polyols which have been produced by ring-opening reaction of epoxidized carboxylic acid esters with monohydric primary alcohols containing up to 22 carbon atoms and/or with dihydric, trihydric and/or polyhydric alcohols, which may optionally be partly etherified or esterified, are used.

8. The use claimed in any of claims 1 to 7, characterized in that reaction mixtures containing ester polyols which have been produced by ring-opening reaction of epoxidized carboxylic acid esters with monocarboxylic acids containing up to 36 carbon atoms are used.

9. The use claimed in any of claims 1 to 8, characterized in that reaction mixtures containing ester polyols which have been produced by ring-opening reaction of epoxidized carboxylic acid esters with carboxylic acids and/or alcohols in ratios of 1:1 to 1:10 - expressed as mol-% epoxide and based on mol-% acid groups and/or alcohol groups - are used.

**Revendications**

1. Utilisation de mélanges réactionnels renfermant des esterpolyols, préparés par mise en réaction sous ouverture de cycle d'esters d'acides carboxyliques époxydés avec des acides carboxyliques et/ou des alcools, comme additifs antimousse dans la fabrication et/ou le traitement des denrées alimentaires ainsi que dans les processus de fermentation.

2. Forme de réalisation selon la revendication 1, caractérisée en ce que les mélanges réactionnels renfermant des esterpolyols sont utilisés en proportions de traces, de préférence en proportions inférieures à 1 % en poids et, en particulier, en proportions de 20 à 50 ppm, par rapport au produit à écumer.

3. Forme de réalisation selon une des revendications 1 ou 2, caractérisée en ce que sont utilisés des mélanges réactionnels renfermant des esterpolyols, qui sont préparés à partir d'esters d'acides carboxyliques époxydés avec au moins un groupe époxyde par molécule.

4. Forme de réalisation selon une des revendications 1 à 3, caractérisée en ce que sont utilisés des mélanges réactionnels renfermant des esterpolyols, qui sont préparés à partir d'esters d'acides carboxyliques époxydés d'alcools monovalents à tétravalents, ramifiés et/ou non ramifiés.

5. Forme de réalisation selon une des revendications 1 à 4, caractérisée en ce que sont utilisés des mélanges réactionnels renfermant des esterpolyols, qui sont préparés à partir d'esters d'acides carboxyliques époxydés, de préférence d'acides carboxyliques époxydés comportant 12 à 22 atomes de C et, en particulier, d'acides gras époxydés d'origine naturelle comportant 12 à 22 atomes de C.

6. Forme de réalisation selon une des revendications 1 à 4, caractérisée en ce que sont utilisés des mélanges réactionnels renfermant des esterpolyols, qui sont préparés à partir d'esters d'acides carboxyliques d'alcools époxydés, de préférence d'alcools époxydés comportant 12 à 22 atomes de C.

7. Forme de réalisation selon une des revendications 1 à 6, caractérisée en ce que sont utilisés des mélanges réactionnels renfermant des esterpolyols, qui sont préparés par mise en réaction sous ouverture de cycle d'esters d'acides carboxyliques époxydés avec des alcools primaires monovalents jusqu'à 22 atomes de C et/ou avec des alcools bivalents, trivalents et/ou polyvalents, pouvant être le cas échéant partiellement éthérifiés ou estérifiés.

8. Forme de réalisation selon une des revendications 1 à 7, caractérisée en ce que sont utilisés des mélanges réactionnels renfermant des esterpolyols, qui sont préparés par mise en réaction sous ouverture de cycle d'esters d'acides carboxyliques époxydés avec un acide monocarboxylique comportant jusqu'à 36 atomes de C.

9. Forme de réalisation selon une des revendications 1 à 8, caractérisée en ce que sont utilisés des mélanges réactionnels renfermant des esterpolyols, qui sont préparés par mise en réaction sous ouverture de cycle d'esters d'acides carboxyliques époxydés avec des acides carboxyliques et/ou des alcools en proportions de 1:1 à 1:10, calculées comme moles % d'époxyde par rapport aux moles % de groupe acide et/ou de groupe alcool.